# EUROPEAN PATENT SPECIFICATION

(11) **EP 4 370 470 B1**
(45) Date of publication and mention of the grant of the patent: **03.09.2025**
(21) Application number: 22744717.4
(22) Date of filing: 06.07.2022
(51) Int. Cl.: C01C 1/04, F25B 31/00

(54) **CONTROL OF PRESSURE IN AN AMMONIA COOLING CIRCUIT AT VARYING LOADS**
DRUCKREGELUNG IN EINEM AMMONIAKKÜHLKREISLAUF BEI WECHSELNDEN BELASTUNGEN
RÉGULATION DE LA PRESSION DANS UN CIRCUIT DE REFROIDISSEMENT D'AMMONIAC À CHARGES VARIABLES

(30) Priority: 14.07.2021 DK PA202100759; 18.10.2021 DK PA202100993
(43) Date of publication of application: 22.05.2024
(73) Proprietor: Topsoe A/S, 2800 Kgs. Lyngby (DK)
(72) Inventor: SPETH, Christian Henrik, 3540 Lynge (DK); HAN, Pat A, 2765 Smørum (DK); KNUDSEN, Lari Bjerg, 2770 Kastrup (DK)
(74) Representative: Topsoe A/S
(86) International application number: PCT/EP2022/068753
(87) International publication number: WO 2023/285240

(56) References cited:
- US-A1- 2018 142 926
- US-A1- 2019 185 332
- US-A1- 2020 156 952

## Description

The present invention relates to the ammonia cooling circuit of an ammonia synthesis plant. Embodiments of the invention relate to a method for operating the ammonia cooling circuit for thereby reducing pressure variations therein resulting from particularly varying loads in a green ammonia synthesis plant i.e. where the hydrogen required for ammonia synthesis is derived from electrolysis of water or steam powered by electricity from renewable energy sources. The invention relates also to an ammonia cooling circuit arranged for carrying out the method, and its use for revamping an ammonia synthesis plant into a green ammonia synthesis plant.

In most current ammonia synthesis plants or processes, an ammonia cooling circuit is normally employed in order to cool the ammonia being produced. The well-known operating principle is to evaporate ammonia at low pressure, thus producing low temperatures that in turn are utilized for cooling of the main process streams. The liberated ammonia vapor is then compressed in an ammonia compressor, and the compressed vapor condensed by means of cooling water or air in an ammonia condensing unit. The resulting liquid ammonia is then collected and re-utilized for cooling.

Normally, temperature and pressure variations in the ammonia cooling circuit are relatively small and are mostly caused by seasonal variations, as the load on the ammonia synthesis plant seldom deviates from near full load. However, in a green ammonia synthesis plant, where there is a high dependency on renewable energy sources such as wind and solar power for producing hydrogen by electrolysis and downstream production of green ammonia, the variations occur more often, for instance about 20 variations on a daily basis. The temperature and pressure variations in the ammonia cooling circuit are a direct result of the varying hydrogen loads upstream inherent in the intermittent nature of electricity generation when utilizing e.g. wind or solar energy. In such cases the efficiency of the ammonia condenser in the ammonia cooling circuit varies, even to such an extent that it might be required to consider stress fatigue in the design of this unit i.e. ammonia condensing unit. This has a substantial impact in terms of risks of damaging equipment here particularly the ammonia condensing unit, equipment lifetime, drift operation and not least costs, especially for revamp projects in which traditional ammonia synthesis plants need to be adapted (revamped) into green ammonia synthesis plants.

WO 2020113011 discloses a method and apparatus for staged start-up of air-cooled low charged packaged ammonia refrigeration system includes motorized valves on condenser coil inlets, a main compressor discharge motorized valve, a bypass pressure regulator valve in the main compressor piping, check valves on the condenser outlets and speed control of the condenser fans. This citation thus relates to an air-cooled (no-evaporative) system which is not suitably for ammonia synthesis plants, the latter being inherently large-scale plants, and further the technical problem being addressed in this citation is mainly concerned with eliminating the need for a stand-alone oil pump to maintain the oil pressure during start-up.

US 20200103149 discloses also an air-cooled ammonia refrigeration system and method. In some embodiments, the air-cooled ammonia refrigeration system comprises: a plurality of air-cooled condensers, each having a heat exchanger and at least one axial fan and having a first operating state capable of condensing vaporous ammonia to form liquid ammonia; and an evaporator coupled to the air-cooled condenser. The system and method of this citation is not suitable for ammonia synthesis plants, as the latter, again, are inherently large-scale plants. Further, for coping with problems associated with loads in the system, this citation teaches to provide a sub-cooler between an air-cooled condenser and an evaporator to reduce the temperature of the liquid ammonia, thereby reducing the load on the system.

It is therefore an object of the present invention to provide a robust ammonia cooling circuit capable of withstanding varying loads in an ammonia synthesis plant, particularly in a green ammonia synthesis plant, i.e. where the hydrogen required for ammonia synthesis is derived from electrolysis of water or steam powered by electricity from renewable energy sources.

This and other objects are solved by the present invention.

Accordingly, in a first aspect the invention is, in a first general embodiment, as recited in appended claim 1, a method for operating an ammonia cooling circuit, said ammonia cooling circuit being the ammonia cooling circuit of an ammonia synthesis plant, said ammonia synthesis plant comprising an ammonia synthesis converter for producing an ammonia product gas stream, said method comprising:
i) evaporating an ammonia liquid stream in an ammonia evaporator using, i.e. by providing, a heat exchanging medium, such as an ammonia product gas stream, for generating an ammonia vapor stream, wherein the heat exchanging medium is the ammonia product gas stream from the ammonia synthesis converter of the ammonia synthesis plant;
ii) compressing the ammonia vapor stream in an ammonia compressor for generating a compressed ammonia vapor stream;
iii) cooling the compressed ammonia vapor stream in an ammonia condensing unit using, i.e. by providing, a cooling medium, such as cooling air or cooling water, for generating a condensed ammonia stream and a cooling medium return stream;
iv) withdrawing the condensed ammonia stream and collecting it in an ammonia accumulator;
v) withdrawing from the ammonia accumulator said ammonia liquid stream;
wherein said method further comprises:
iii-1) adapting the liquid level of condensing ammonia inside the ammonia condensing unit according to the pressure of the compressed ammonia vapor stream, in which the ammonia condensing unit is a tube-shell heat exchanger having condensing ammonia passing in the shell side, and the cooling medium being water i.e. cooling water, passing in the tube side.

It would be understood, that the term "using" is used interchangeably with the term "by providing".

It would be understood, that the cooling medium is water, which is used interchangeably with the term "cooling water".

It would be understood, that the ammonia synthesis plant comprises and ammonia synthesis converter for producing an ammonia product gas stream from an ammonia synthesis gas comprising hydrogen and nitrogen.

It would be understood, that where the hydrogen is provided by electrolysis of water or steam, the ammonia synthesis plant is a green ammonia synthesis plant. Accordingly, a green ammonia synthesis plant is herein defined as an ammonia synthesis plant in which the hydrogen required for ammonia synthesis is provided by water or steam electrolysis powered by electricity generated from renewable sources, such as wind, solar or hydropower.

The term "comprises" includes "comprises only", i.e. "consists of".

The term "suitably" means optionally, i.e. an optional embodiment.

The terms "present invention" or simply "invention", and "present application" are used interchangeably.

The term "first aspect" e.g. "first aspect of the invention" means method for operating the ammonia cooling circuit. The term "second aspect" means the "ammonia cooling circuit". The term "third aspect" means the use of the ammonia cooling circuit to revamp an ammonia synthesis plant. The term "fourth aspect" means the ammonia synthesis plant comprising the ammonia cooling circuit.

Other definitions are provided in connection with one or more embodiments below.

The discharge pressure from the ammonia compressor, i.e. the pressure of the compressed ammonia vapor stream, depends on the condensation temperature of the ammonia vapor, which again depends on the cooling media temperature in the ammonia condensing unit as well as its efficiency. The present invention enables to vary the efficiency of the ammonia condensing unit, and/or the flow and temperature of the cooling medium temperature, for thereby reducing pressure variations.

Hence, contrary to what would normally be expected, namely that a reduction in load in the ammonia synthesis plant (hereinafter also referred to as "load") would suggest reducing the pressure of the cooling circuit by cooling as much as possible in the ammonia condensing unit so as to save compression energy, since the temperature of the condensed ammonia stream at the outlet of the ammonia condensing unit determines the pressure of the ammonia cooling circuit -which is the saturation pressure at this temperature-, the present invention aims instead at maintaining the pressure in the cooling circuit, thereby avoiding risks of equipment (ammonia condensing unit) stress fatigue and thereby reduction of equipment lifetime.

As used herein, the term "load" means the percentage of hydrogen feed being used for conducting ammonia synthesis in the ammonia synthesis plant with respect to the load at normal operation (100% load). The ammonia production capacity of the plant is assumed directly proportional to the hydrogen feed being used. It would therefore be understood, that a 10% load means 10% hydrogen used for ammonia synthesis with respect to normal operation. The hydrogen used is from water (steam) electrolysis, as is well-known in the art. Full load means 100% load and corresponds to normal operation of the ammonia synthesis plant.

As used herein, the term "normal operation" means conditions where the load is 100% (100% load) and where the cooling water to the ammonia condensing unit is set at a typical value for summer conditions during the day, e.g. 29°C.

For the purposes of the present application, normal operation may alternatively be regarded as operation of the ammonia synthesis plant, where the ammonia synthesis converter runs at loads substantially corresponding to full capacity (100%), thus varying by a narrow margin of ±15%, for instance ±10%, with respect to the design value of the ammonia synthesis converter, i.e. the ammonia synthesis gas being directed therethrough is 85-115% of the design value of the converter, for instance 90%, 95%, 100%, 105%, 110% of the design value of the converter.

The design value of the converter is suitably represented in terms of the space velocity (SV), for instance the design value of the converter (reactor) is a space velocity over the first catalyst bed of a catalyst module ranging between 20000 and 50000 Nm³/h/m³, such as in the range 25000-45000 Nm³/h/m³. A low load of e.g. 10% means therefore a SV in the range of e.g. 2500-4500 Nm³/h/m³, i.e. 2500-4500 h⁻¹.

It would be understood that under varying load, the reactor runs at loads significantly different from normal load and thus from full capacity, varying by a broad margin of said more than ± 15%, i.e. the process gas being directed therethrough is for instance 5-80% of the design value of the reactor, or for instance 120% or 125% of the design value of the reactor.

The ammonia synthesis gas comprises hydrogen (H₂) and nitrogen (N₂), suitably in the molar ratio H₂:N₂ of 3.

In conducting the method of the invention according to step iii-1), the pressure variations are attenuated or eliminated by controlling the efficiency of the ammonia condensing unit. This is achieved by adapting the liquid level of condensing ammonia, i.e. the liquid level of ammonia being condensed in the shell side of the ammonia condensing unit, by for instance providing a valve at the outlet of the ammonia condensing unit. The valve is suitably regulated by the liquid level in the ammonia condensing unit in accordance with the discharge pressure of the ammonia compressor.

The ammonia condensing unit is a tube and shell heat exchanger of e.g. U-tube type, and straight-tube type such as one pass tube-side or two pass tube-side. The cooling medium is cooling water, for instance cooling water from a cooling tower. The cooling water temperature is for instance 29°C during normal plant operation (100% load, summer conditions during the day), but may increase to for instance 32°C during summer, or fall significantly e.g. down to e.g. 23°C or even lower during nights, thereby also causing temperature and pressure variations. Thus, even when operating at the same load (100% load), the higher or lower cooling water temperature may result in a significant variation in the discharge pressure, i.e. the pressure change in the cooling circuit, relative to normal operation, thereby bringing the maximum allowable pressure variation outside the required threshold for avoiding stress fatigue, as it will become apparent farther below.

For instance, where the load in the plant is decreased to 10% with respect to the normal 100% load, significant variations in the discharge pressure and temperature occur, e.g. by the pressure fluctuating down to -10%, -20% or more with respect to normal operation, thus conveying the risk of stress fatigue as recited farther above. These variations are attenuated or eliminated by purposely decreasing the efficiency of the ammonia condensing unit with respect to normal operation.

By the present invention, in step iii-1) the tube-shell heat exchanger is a tube-shell heat exchanger having condensing ammonia passing in the shell side, and the cooling medium is water i.e. cooling water, passing in the tube side.

In an embodiment, as recited in appended claim 2, in iii-1) the liquid level of condensing ammonia in the ammonia condensing unit is such that 70% or less of the surface area for heat exchange in the ammonia condensing unit is available, such as 65% or less, for instance 60% or less, 50% or less, 40% or less, 30% or less, 20% or less, e.g. in the range 10-75%, with respect to a normal operation.

Hence, where the ammonia condensing unit is e.g. a tube-shell heat exchanger having condensing ammonia in the shell side and cooling water in the tube side, by 30% or more of the tubes therein (i.e. tube bundle) are in purpose being covered by the condensed ammonia with respect to when operating at normal conditions. It would be understood, that at normal conditions the liquid level of condensing ammonia in the ammonia condensing unit is not necessarily such that 100% of the surface area for heat exchange in the ammonia condensing unit is available. At normal conditions, often about 95% of the surface area for heat exchange would be available.

Hence, the tubes may in a way be "flooded" in condensed ammonia when the ammonia synthesis plant operates with varying loads, in particular lower than normal loads (100% load), so that the compressed ammonia vapor stream entering the ammonia condensing unit is exposed to a smaller cooling surface area compared to normal conditions, as many of the tubes are immersed in the condensed ammonia. For instance, when operating with lower loads, e.g. 10% or 40% of normal load there will be less need of using a higher surface area in the ammonia condensing unit.

When operating the ammonia synthesis plant at e.g. 10% load, the discharge pressure from the ammonia compressor decreases and the variation in the discharge pressure, i.e. the pressure change in the cooling circuit relative to normal operation may be more than the required threshold for avoiding stress fatigue, thus conveying a higher risk of equipment stress fatigue. The pressure variations may also be the result of the change in condensed ammonia temperature i.e. outlet temperature of ammonia condensing unit due to e.g. use of significantly lower temperature of cooling water from a cooling tower during the night or during winter time, while still operating at normal load. It has been found that the effect of variations in the temperature of the cooling water may also be compounded with the effect of reduction in load, thereby causing significant pressure variations in the ammonia cooling circuit, thus bringing the equipment into the stress fatigue regime.

Such pressure variations convey particularly the risk of reaching the maximum allowable pressure variation in the ammonia condensing unit, which is -15% of the design pressure for normal operation i.e. when operating at normal load. For instance, the design pressure for normal operation of the ammonia condensing unit is 25 barg (25 bar above atmospheric pressure). Operation at 10% load e.g. together with a cooling water temperature of 25°C during the night, may convey a pressure change of - 15% with respect to mechanical design pressure, i.e. 3.75 barg (15% of 25 barg, as per ASME standard - ASME BPVC VIII.2-2019), if e.g. the liquid level of condensing ammonia inside the ammonia condensing unit is maintained unchanged (as when the load is 100% and the cooling water temperature is that during the day, e.g. 29°C). If the change from mechanical design pressure is higher than this threshold value of 3.75 barg, i.e. more than -15% change, for instance -20%, the risk of equipment stress fatigue and thereby equipment lifetime becomes imminent.

By conducting step i) by adapting the liquid level in the ammonia condensing unit by exposing only 70% or less of the available surface area, with respect to normal operation, the relative efficiency of the ammonia condensing unit decreases and thereby the variation in pressure is attenuated or eliminated.

As used herein, the term "relative efficiency" means the percentage of available surface area of the ammonia condensing unit with respect to normal operation. Thus, under normal operation the relative efficiency of the ammonia condensing unit is 1 (100%).

Thereby, a robust ammonia circulation circuit capable of withstanding varying loads and/or temperature conditions from day to night in the ammonia synthesis plant is achieved, particularly when the ammonia synthesis plant is revamped into a green ammonia synthesis plant or where a new green ammonia synthesis plant is erected. In a green ammonia synthesis plant, facing varying loads becomes unavoidable due to intermittent nature of the renewable sources. Further, green ammonia plants are normally planned for installation and operation in world regions where there is high availability of renewable sources, for instance solar, and thus in regions where outside temperatures change significantly from day and night. For instance, significantly lower temperatures at night convey the challenge of having significantly lower temperatures in the cooling water from a cooling towers, thus compounding with the varying loads for bringing the allowable change from design pressure in the ammonia condensing unit to a value higher than the above-mentioned threshold value of 3.75 barg.

The term "robust" means that a stable pressure in the ammonia cooling circuit is achieved regardless of e.g. the load change and/or outside temperature change, thus preventing the risk of equipment stress fatigue and thereby reduction on equipment lifetime, e.g. lifetime of the ammonia condensing unit.

As used herein, the term "ammonia cooling circuit" has the same meaning as "ammonia refrigeration circuit", as is commonly used in the field of ammonia synthesis.

In an embodiment, as recited in appended claim 3, the method further comprises:
iii-2) adapting the flow of cooling medium to the ammonia condensing unit according to the pressure of the compressed ammonia vapor stream; and/or
iii-3) adapting the temperature of cooling medium directed to the ammonia condensing unit by recycling a portion of the cooling medium return stream.
Hence, by the invention, the robust ammonia circulation circuit may also be achieved in accordance with step iii-2) by regulating the flow of cooling medium to the ammonia condensing unit, the cooling medium, again suitably being cooling water, thereby also providing a simple alternative which can be used alone or in combination with iii-1) or iii-3). In conducting step iii-2), the flow of cooling medium is adapted by for instance providing a valve at the cooling medium inlet to the ammonia condensing unit and which is regulated by the discharge pressure of the ammonia compressor. The flow is also adapted to be high enough for preventing undesired fouling in the ammonia condensing unit.

By the invention, the robust ammonia cooling circuit is also achieved in accordance with step iii-3) by controlling the temperature in the ammonia condensing unit, i.e. the cooling medium temperature, via recycle of a portion of the cooling medium return stream i.e. cooling medium after being used in the ammonia condensing unit, thereby also providing a simple alternative which can be used alone or in combination with iii-1) or iii-2). The amount of recycle is for instance controlled by providing a valve in the cooling medium return prior to mixing with the incoming cooling medium and which is regulated by the discharge pressure of the ammonia compressor. As cooling water is used as the cooling medium, a pump is provided in the recycle. It would also be understood, that the term "recycling a portion of the cooling medium return stream" means mixing with the incoming cooling medium, as recited above.

In the present application, the heat exchanging medium of the ammonia evaporator in step i) is ammonia product gas stream from the ammonia synthesis converter of an ammonia synthesis plant. Accordingly, the ammonia cooling circuit is integrated downstream the ammonia synthesis converter of an ammonia synthesis plant. The thereby cooled ammonia product gas is suitably separated into product ammonia, and an ammonia product gas recycle stream which is conducted to the ammonia synthesis converter of the ammonia synthesis process or plant and which in addition can be used for cooling the ammonia product gas prior to entering the ammonia evaporator.

In an embodiment, step i) is conducted in a plurality of ammonia evaporators, such as in two ammonia evaporators arranged in series or in parallel.

In an embodiment, as recited in appended claim 4, prior to conducting step ii) i.e. ammonia vapor compression, the ammonia vapor stream is conducted to a knock-out drum for generating said ammonia vapor stream. The ammonia compressor is thereby protected, since any droplets in the ammonia vapor stream are removed.

In an embodiment, as recited in appended claim 5, an ammonia liquid purge stream is withdrawn from the ammonia evaporator which is conducted to an ammonia separation unit, such as flash vessel, for generating a separate ammonia vapor stream. In a particular embodiment, as recited in appended claim 6, the separate ammonia vapor stream is fed directly to the ammonia compressor in step ii) or combined with said ammonia vapor stream from the knock-out drum, i.e. prior to conducting step ii). The ammonia compressor is thereby still being protected, since any droplets in the ammonia vapor stream are removed in the ammonia separation unit, e.g. flash vessel, and in the knock-out drum, as described above. The ammonia separation unit may also be arranged for receiving ammonia product gas and withdrawing as a bottom an effluent liquid ammonia product.

In an embodiment, step ii) is conducted in a multi-stage ammonia compressor, such as a two-three stage ammonia compressor.

Suitably, the separate ammonia vapor stream from the ammonia separation unit, e.g. flash vessel, is passed to the first stage of the multi-stage ammonia compressor.

It would be understood, that throughout the present application, the term "discharge pressure from the ammonia compressor" refers to the most downstream compressor where a multi-stage ammonia compressor is utilized. It would also be understood that when referring to pressure variations in the ammonia cooling circuit, it is meant the discharge pressure from the ammonia compressor, which is the same as the pressure in the ammonia condensing unit.

In a particular embodiment, step ii) is conducted in a multi-stage ammonia compressor using inter-stage knock-out drums. Again, the knock-out drums are provided for protection of the ammonia compressor by removing any droplets in the ammonia vapor stream.

Under normal operation the load on the ammonia synthesis plant seldom deviates from full load (100% load), thus the risk of surge in the ammonia compressor is normally low. It has now also been found, that load variations can further be attenuated or eliminated by a particular anti-surge control of the ammonia compressor.

As the load varies and is decreased to for instance 40% or 10% of the normal load, the risk of surge in the ammonia compressor increases. Surge, as is well known in the art, is a serious technical problem in compressors by which the flow through the compressor is reversed and must be prevented to avoid damaging the compressor.

An anti-surge system uses instrumentation around a compressor, including surge controllers which by means of algorithms monitor the performance of the compressor and thereby when its operation approaches surge conditions. For instance, the flow rates, pressures and temperatures of the suction line carrying the ammonia vapor and the discharge line carrying the compressed ammonia vapor, are fed into the surge controller, and when reaching surging conditions, gas from the discharge line by means of a flow control valve, is recycled to the suction line to maintain the forward flow in the ammonia compressor.

During normal operation the anti-surge system is not needed, but when the load varies and is down to for instance 10%, the thus lower capacity of the ammonia compressor may be managed by a speed controller in the compressor motor, and/or by using the anti-surge system as described above. However, this results in that hot ammonia vapor gas is recycled upstream the ammonia compressor, with the attendant risk of the temperature in metal parts therein reaching temperature changes of above 28°C, which then requires taking the compressor or compressor parts out for stress fatigue analysis.

Accordingly, in another embodiment, as recited in appended claim 7, step ii) further comprises providing an anti-surge system such as an anti-surge valve i.e. kickback valve and optionally a flow regulation valve in the ammonia compressor; and further recycling yet another portion of the compressed ammonia vapor stream i.e. a dedicated process recycle stream, such as up to 10% of its flow volume e.g. up to 1% of its flow volume, through the anti-surge valve and the optional flow regulation valve of the ammonia compressor.

Thereby it is possible to achieve a continuous flow for preventing risks of stress fatigue in the ammonia compressor or metal parts therein, as the flow is being controlled for maintaining the change in temperature of the metal parts of the ammonia compressor at below 28°C, from almost closed position to open position of the anti-surge valve. While an anti-surge system is dedicated for protection of the ammonia compressor only, the dedicated process recycle stream in a simple manner enables furthermore the protection of additional equipment such as piping and anti-surge cooler for the last stage of the ammonia compressor.

Thereby the robustness of the ammonia cooling circuit is further enhanced, by preventing the risks of stress fatigue in the equipment, not only the ammonia condensing unit, but also said additional equipment.

In a second general embodiment according to the first aspect, as recited in appended claim 8, the invention is a method for operating an ammonia cooling circuit, said ammonia cooling circuit being the ammonia cooling circuit of an ammonia synthesis plant, said ammonia synthesis plant comprising an ammonia synthesis converter for producing an ammonia product gas stream, said method comprising:
i) evaporating an ammonia liquid stream in an ammonia evaporator using a heat exchanging medium for generating an ammonia vapor stream, wherein the heat exchanging medium is the ammonia product gas stream from the ammonia synthesis converter of the ammonia synthesis plant;
ii) compressing the ammonia vapor stream in an ammonia compressor for generating a compressed ammonia vapor stream;
iii) cooling the compressed ammonia vapor stream in an ammonia condensing unit using a cooling medium, for generating a condensed ammonia stream and a cooling medium return stream;
iv) withdrawing the condensed ammonia stream and collecting it in an ammonia accumulator;
v) withdrawing from the ammonia accumulator said ammonia liquid stream;
wherein said method further comprises:
- adapting the flow of cooling medium to the ammonia condensing unit according to the pressure of the compressed ammonia vapor stream; and/or
- adapting the temperature of cooling medium directed to the ammonia condensing unit by recycling a portion of the cooling medium return stream.

The associated benefits are recited farther above in connection with the corresponding embodiments according of the first general embodiment.

In a second aspect, as recited in appended claim 9, the invention encompasses also an ammonia cooling circuit arranged for carrying out the method according to any of the above embodiments; wherein the ammonia cooling circuit comprises:
- an ammonia evaporator arranged to receive an ammonia liquid stream and provide an ammonia vapor stream, the ammonia evaporator being arranged to receive an ammonia product gas stream from the ammonia synthesis converter of an ammonia synthesis plant, as heat exchanging medium;
- an ammonia compressor arranged to receive the ammonia vapor stream and provide a compressed ammonia vapor stream;
- an ammonia condensing unit arranged to receive the compressed ammonia vapor stream and provide a condensed ammonia stream, the ammonia condensing unit being a tube-shell heat exchanger arranged to receive a cooling medium being water i.e. cooling water in which condensing ammonia passes in the shell side and the cooling water passes in the tube side;
- an ammonia accumulator arranged to receive the condensed ammonia stream and provide the ammonia liquid stream.

The ammonia cooling circuit does not comprise a sub-cooler between the air condensing unit condenser and the ammonia evaporator, the sub-cooler being arranged to remove heat from the ammonia liquid stream passing from the air-cooled condenser to the ammonia evaporator.

In a third aspect, as recited in appended claim 10, the invention encompasses the use of the ammonia cooling circuit in accordance with the second aspect of the invention for the revamping of an ammonia synthesis plant into a green ammonia synthesis plant. Hence, the ammonia cooling circuit of the present invention is suitably adapted as the ammonia cooling circuit of an ammonia synthesis plant which is revamped (retrofitted) into a green ammonia synthesis plant, i.e. an ammonia synthesis plant in which the hydrogen required for ammonia synthesis is provided by water or steam electrolysis powered by electricity generated from renewable sources such as wind, solar or hydropower.

In a fourth aspect, the invention encompasses an ammonia synthesis plant, suitably a green ammonia synthesis plant, comprising the ammonia cooling circuit arranged for carrying out the method according to any of the above embodiments, the green ammonia synthesis plant being defined as an ammonia synthesis plant in which the hydrogen required for ammonia synthesis is provided by water or steam electrolysis powered by electricity generated from renewable sources, such as wind, solar or hydropower.

Accordingly, as recited in appended claim 11, the ammonia synthesis plant comprises:
- the ammonia cooling circuit according to the second aspect of the invention;
- an ammonia synthesis converter arranged to receive ammonia synthesis gas comprising hydrogen and nitrogen, and provide the ammonia product gas stream;
- an electrolysis unit arranged to receive water or steam and provide said hydrogen.

It would be understood, that where the electrolysis unit is powered by electricity generated from renewable sources, such as wind, solar or hydropower, the ammonia synthesis plant is a green ammonia synthesis plant.

Any of the embodiments and associated advantages of the first aspect of the invention may be used in connection with the second and third and fourth aspect of the invention.
Fig. 1 shows a typical set up of an ammonia cooling circuit under normal operation.
Fig. 2 shows an embodiment according to the invention with varying loads in which the ammonia cooling circuit is operated by controlling the level of condensing ammonia in the ammonia condensing unit.
Fig. 3 shows an embodiment according to the invention with varying loads in which the ammonia cooling circuit is operated by mixing a portion of the cooling medium return stream with the cooling medium the ammonia condensing unit and/or by controlling the flow of cooling medium.

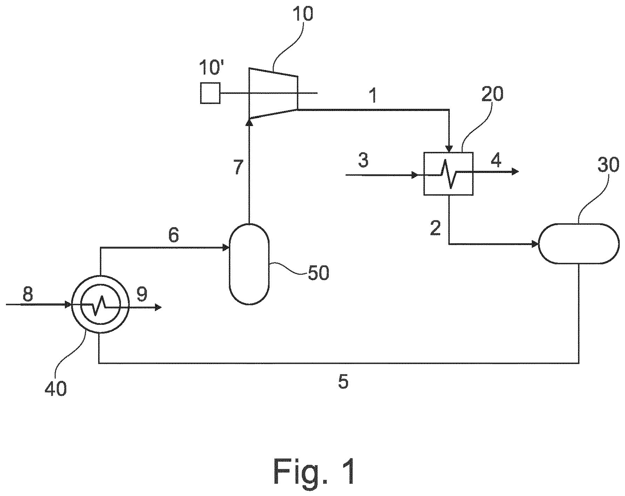

With reference to Fig. 1, an ammonia cooling circuit is shown under normal operation (100% load, typical summer conditions during the day where cooling water temperature is e.g. 29°C). The ammonia cooling circuit is provided downstream the ammonia synthesis converter in an ammonia synthesis plant. From ammonia compressor 10 having arranged therein a driving unit 10', compressed ammonia vapor stream 1 is generated. The discharge pressure, i.e. pressure of ammonia vapor stream 1 is typically under normal operation conditions about 13 barg. In ammonia condensing unit 20, the compressed vapor stream is cooled thus generating a condensed ammonia stream 2 at about same upstream pressure, i.e. about 13 barg. For cooling, a cooling medium (cooling water 3) from e.g. a cooling tower, here cooling water at 29°C, enters the ammonia condensing unit 20 and leaves as cooling medium return stream 4. The condensed ammonia stream 2 is collected in ammonia accumulator 30 and then circulated as ammonia liquid stream 5. The ammonia liquid stream 5 is evaporated at low pressure in ammonia evaporator 40 using ammonia product gas 8, 9 from an ammonia synthesis converter (not shown) as heat exchanging medium. The thus generated ammonia vapor stream 6 is conducted to knock-out drum 50 for removing any liquid droplets, then withdrawn as ammonia vapor stream 7 and finally compressed in ammonia compressor 10 thereby closing the circuit. Dedicated means for controlling the pressure in the cooling circuit is not featured, since the load (100% load i.e. normal operation) is stable over longer periods.

Using renewable energy for producing ammonia will provide fluctuations throughout a day in feed gas flow rate of hydrogen resulting in varying loads with respect to normal operation and thereby many and possibly also abrupt pressure fluctuations in the ammonia circulation loop. In addition, significant variations between day and night temperatures result in significant variations in cooling water temperature, as this cooling water typically stems from a cooling tower, thereby also significantly affecting the outlet temperature of the ammonia condensing unit and thereby the discharge pressure of the compressed ammonia stream. These are smoothed out i.e. attenuated or even eliminated by the method according to the invention.

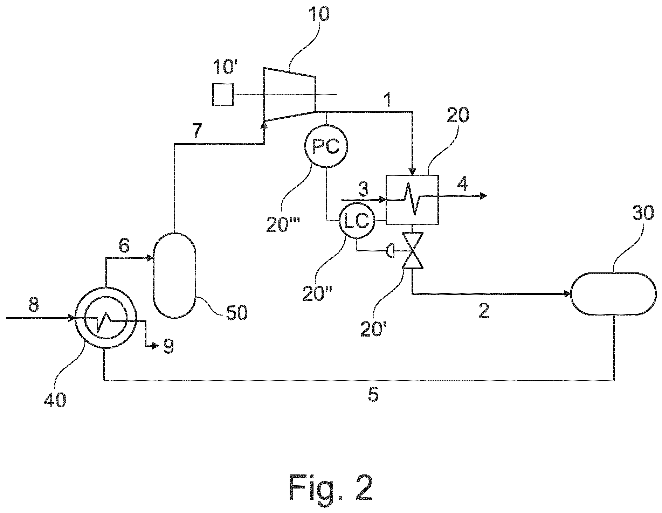

Hence, with reference to Fig. 2, the pressure variations (pressure variations in discharge pressure of compressed ammonia stream 1) are attenuated or eliminated by controlling the efficiency of the ammonia condensing unit 20, i.e. how much of the surface area available in the ammonia condensing unit (tube and shell heat exchanging unit), is utilized for heat exchange. The liquid level of ammonia being condensed in the shell side of the ammonia condensing unit 20 is adapted by providing a valve 20' at the outlet of the ammonia condensing unit 20 as shown in the figure. The valve is suitably regulated by the discharge pressure of the ammonia compressor (as denoted by PC, 20"'), optionally also by the liquid level in the ammonia condensing unit 20 (as denoted by LC, 20").

Where the load in the plant is decreased to e.g. 10% with respect to the normal 100% load and which may be further compounded with reducing cooling water temperatures during the night, significant variations in the discharge pressure and temperature occur which are attenuated or eliminated by purposely decreasing the efficiency of the ammonia condensing unit. This is achieved by adapting the liquid level of condensing ammonia in the ammonia condensing unit 20 such that less of the surface area for heat exchange in the ammonia condensing unit is available with respect to the when operating at normal conditions (normal operation), by purposely partly covering the tubes therein with the condensed ammonia. The cooling medium 3 is cooling water supplied from a cooling tower.

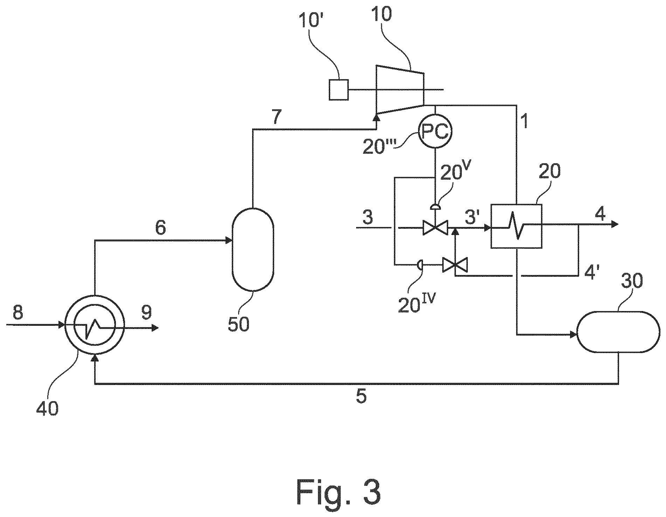

With reference to Fig. 3, the pressure variations (pressure variations in discharge pressure of compressed ammonia stream 1) are attenuated or eliminated by adapting the flow of cooling medium to the ammonia condensing unit 20, and/or by controlling the temperature of the cooling medium 3 to the ammonia condensing unit 20. Hence, in the former approach, the pressure variations in the discharge pressure of compressed ammonia stream 1 are attenuated or eliminated by adapting the flow of cooling medium 3, e.g. air or water, to the ammonia condensing unit 20. This flow is suitably regulated by means of valve 20^{v} according to the discharge pressure of ammonia compressor (as denoted by PC 20‴). In the latter approach, a recycle stream 4' derived from the cooling medium return stream 4 is provided thereby adapting the temperature of cooling medium 3' directed to the ammonia condensing unit 20. The recycle flow is suitably regulated by means of valve 20^{iv} according to the discharge pressure of ammonia compressor (as denoted by PC 20‴). As cooling water is used as the cooling medium, a pump (not shown) is provided for recycling stream 4'.

### EXAMPLE

The following table shows the temperature and pressure variations of the ammonia cooling circuit of an ammonia synthesis plant at different loads with respect to normal operation (100% load, cooling water inlet temperature of e.g. 29°C during the day), the duty of the ammonia condensing unit using cooling water as cooling medium, as well as the relative efficiency of the ammonia condensing unit at varying loads and cooling water inlet temperature during the night. Overall the pressure variation is a consequence of the change in condensed ammonia temperature i.e. outlet temperature of ammonia condenser due to either lower cooling water inlet and/or oversizing of the ammonia condensing unit due to low load.

The values of the table where the relative efficiency is 100% correspond basically to operation according to the cooling circuit of Fig. 1 and hence, changes in load causing pressure variations and cooling water temperature are not properly attenuated to avoid reaching the threshold value of maximum allowable pressure change with respect to 100% load of -15% of mechanical design pressure of the ammonia condensing unit, i.e. 15% of 25 barg (3.75 barg).

For instance, if the ammonia production is changed so that the load is 40% and the cooling water temperature at night drops to 23°C, and the relative efficiency of the ammonia condensing unit is kept unchanged (100%) by not reducing the available surface area therein for heat exchange, the threshold of -15% is reached (13,1 - 3.75 = 9.3 barg). However, by partly "flooding" the tubes (tube bundle) of the ammonia condensing unit as described in connection with Fig. 2, so that the relative efficiency is 60%, the pressure change becomes only -5% and is thus acceptable.

**TABLE**

| Ammonia production | Cooling water inlet temp. (°C) | Discharge pressure (barg) | Condensed ammonia temp (°C) | Duty of ammonia cond. unit (Gcal/h) | Pressure change from 100% load*** | Relative efficiency (%)**** |
|---|---|---|---|---|---|---|
| Stream | 3 | 1 | 2 | - | - | |
| | | | | | | |
| Load | | | | | | |
| 10% - night | 25 | 9.3 | 25.6 | 2.7 | -15% | 100* |
| 10% - night | 25 | 11.8 | 33.0 | 2.7 | -5% | 30** |
| 40% - night | 23 | 9.3 | 25.6 | 13.3 | -15% | 100* |
| 40% - night | 23 | 11.8 | 33.0 | 13.3 | -5% | 60** |
| 100% - day | 29 | 13.1 | 36.4 | 32.3 | 0% | 100* |

| | | | | | | |
|---|---|---|---|---|---|---|
| * Base case **According to an embodiment of the invention by partially "flooding" of the tubes in the ammonia condensing unit, here a tube and shell heat exchanger with condensing ammonia outside the tubes and cooling water inside the tubes ***As per ASME BPVC VIII.2-2019 the max. allowable pressure variation in the ammonia condensing unit is 15% of mechanical design pressure, i.e. 15% of 25 barg = 3.75 barg **** Relative efficiency: percentage of available surface area of the ammonia condensing unit with respect to normal operation with cooling water at 29°C and 100% load | | | | | | |

## Claims

1. Method for operating an ammonia cooling circuit, said ammonia cooling circuit being the ammonia cooling circuit of an ammonia synthesis plant, said ammonia synthesis plant comprising an ammonia synthesis converter for producing an ammonia product gas stream, said method comprising:
i) evaporating an ammonia liquid stream in an ammonia evaporator using a heat exchanging medium for generating an ammonia vapor stream, wherein the heat exchanging medium is the ammonia product gas stream from the ammonia synthesis converter of the ammonia synthesis plant;
ii) compressing the ammonia vapor stream in an ammonia compressor for generating a compressed ammonia vapor stream;
iii) cooling the compressed ammonia vapor stream in an ammonia condensing unit using a cooling medium for generating a condensed ammonia stream and a cooling medium return stream;
iv) withdrawing the condensed ammonia stream and collecting it in an ammonia accumulator;
v) withdrawing from the ammonia accumulator said ammonia liquid stream;
wherein said method further comprises:
iii-1) adapting the liquid level of condensing ammonia inside the ammonia condensing unit according to the pressure of the compressed ammonia vapor stream, in which the ammonia condensing unit is a tube-shell heat exchanger having condensing ammonia passing in the shell side, and the cooling medium being water i.e. cooling water, passing in the tube side.

2. Method according to claim 1, wherein in iii-1) the liquid level of condensing ammonia in the ammonia condensing unit is such that 70% or less of the surface area for heat exchange in the ammonia condensing unit is available, with respect to a normal operation; the normal operation being defined as 85-115% of the design value of the ammonia synthesis converter, and in which the design value of the ammonia synthesis converter is the space velocity (SV) over the first catalyst bed of a catalyst module and ranging between 20000 and 50000 Nm³/h/m³.

3. Method according to any of claims 1-2, further comprising:
iii-2) adapting the flow of cooling medium to the ammonia condensing unit according to the pressure of the compressed ammonia vapor stream; and/or
iii-3) adapting the temperature of cooling medium directed to the ammonia condensing unit by recycling a portion of the cooling medium return stream.

4. Method according to any of claims 1-3, wherein prior to conducting step ii) the ammonia vapor stream is conducted to a knock-out drum for generating said ammonia vapor stream.

5. Method according to any of claims 1-4, wherein an ammonia liquid purge stream is withdrawn from the ammonia evaporator which is conducted to an ammonia separation unit, such as flash vessel, for generating a separate ammonia vapor stream.

6. Method according to claim 5, wherein the separate ammonia vapor stream is fed directly to the ammonia compressor in step ii) or combined with said ammonia vapor stream from the knock-out drum, i.e. prior to conducting step ii).

7. Method according to any of claims 1-6, wherein step ii) further comprises providing an anti-surge system such as an anti-surge valve i.e. kickback valve and optionally a flow regulation valve in the ammonia compressor; and further recycling yet another portion of the compressed ammonia vapor stream i.e. a dedicated process recycle stream, such as up to 10% of its flow volume e.g. up to 1% of its flow volume, through the anti-surge valve and the optional flow regulation valve of the ammonia compressor.

8. Method for operating an ammonia cooling circuit, said ammonia cooling circuit being the ammonia cooling circuit of an ammonia synthesis plant, said ammonia synthesis plant comprising an ammonia synthesis converter for producing an ammonia product gas stream, said method comprising:
i) evaporating an ammonia liquid stream in an ammonia evaporator using a heat exchanging medium for generating an ammonia vapor stream, wherein the heat exchanging medium is the ammonia product gas stream from the ammonia synthesis converter of the ammonia synthesis plant;
ii) compressing the ammonia vapor stream in an ammonia compressor for generating a compressed ammonia vapor stream;
iii) cooling the compressed ammonia vapor stream in an ammonia condensing unit using a cooling medium, for generating a condensed ammonia stream and a cooling medium return stream;
iv) withdrawing the condensed ammonia stream and collecting it in an ammonia accumulator;
v) withdrawing from the ammonia accumulator said ammonia liquid stream;
wherein said method further comprises:
- adapting the flow of cooling medium to the ammonia condensing unit according to the pressure of the compressed ammonia vapor stream; and/or
- adapting the temperature of cooling medium directed to the ammonia condensing unit by recycling a portion of the cooling medium return stream.

9. An ammonia cooling circuit arranged for carrying out the method according to any of claims 1-8; wherein the ammonia cooling circuit comprises:
- an ammonia evaporator arranged to receive an ammonia liquid stream and provide an ammonia vapor stream, the ammonia evaporator being arranged to receive an ammonia product gas stream from the ammonia synthesis converter of an ammonia synthesis plant, as heat exchanging medium;
- an ammonia compressor arranged to receive the ammonia vapor stream and provide a compressed ammonia vapor stream;
- an ammonia condensing unit arranged to receive the compressed ammonia vapor stream and provide a condensed ammonia stream, the ammonia condensing unit being a tube-shell heat exchanger arranged to receive a cooling medium being water i.e. cooling water in which condensing ammonia passes in the shell side and the cooling water passes in the tube side;
- an ammonia accumulator arranged to receive the condensed ammonia stream and provide the ammonia liquid stream.

10. Use of the ammonia cooling circuit of claim 9 for the revamping of an ammonia synthesis plant into a green ammonia synthesis plant, the green ammonia synthesis plant being defined as an ammonia synthesis plant in which the hydrogen required for ammonia synthesis is provided by water or steam electrolysis powered by electricity generated from renewable sources, such as wind, solar or hydropower.

11. An ammonia synthesis plant comprising:
- the ammonia cooling circuit according to claim 9;
- an ammonia synthesis converter arranged to receive ammonia synthesis gas comprising hydrogen and nitrogen, and provide the ammonia product gas stream;
- an electrolysis unit arranged to receive water or steam and provide said hydrogen.

## Patentansprüche

1. Verfahren zum Betreiben eines Ammoniak-Kühlkreislaufs, wobei der Ammoniak-Kühlkreislauf der Ammoniak-Kühlkreislauf einer Ammoniaksyntheseanlage ist, wobei die Ammoniaksyntheseanlage einen Ammoniaksynthesekonverter zum Erzeugen eines Ammoniak-Produktgasstroms umfasst, wobei das Verfahren Folgendes umfasst:
i) Verdampfen eines flüssigen Ammoniakstroms in einem Ammoniakverdampfer unter Verwendung eines Wärmeaustauschmediums zum Erzeugen eines Ammoniakdampfstroms, wobei das Wärmeaustauschmedium der Ammoniak-Produktgasstrom aus dem Ammoniaksynthesekonverter der Ammoniaksyntheseanlage ist;
ii) Komprimieren des Ammoniakdampfstroms in einem Ammoniakkompressor zum Erzeugen eines komprimierten Ammoniakdampfstroms;
iii) Kühlen des komprimierten Ammoniakdampfstroms in einer Ammoniakkondensationseinheit unter Verwendung eines Kühlmediums zum Erzeugen eines kondensierten Ammoniakstroms und eines Kühlmediumrücklaufstroms;
iv) Abziehen des kondensierten Ammoniakstroms und Sammeln desselben in einem Ammoniakspeicher;
v) Abziehen des flüssigen Ammoniakstroms aus dem Ammoniakspeicher;
wobei das Verfahren weiter Folgendes umfasst:
iii-1) Anpassen des Flüssigkeitsstandes des kondensierenden Ammoniaks innerhalb der Ammoniakkondensationseinheit entsprechend dem Druck des komprimierten Ammoniakdampfstroms, wobei die Ammoniakkondensationseinheit ein Rohrbündelwärmetauscher ist, bei dem kondensierendes Ammoniak auf der Mantelseite durchläuft, und bei dem es sich bei dem Kühlmedium um Wasser, d. h. Kühlwasser, handelt, das auf der Rohrseite durchläuft.

2. Verfahren nach Anspruch 1, wobei in iii-1) der Flüssigkeitsstand des kondensierenden Ammoniaks in der Ammoniakkondensationseinheit so bemessen ist, dass 70 % oder weniger der Oberfläche für den Wärmeaustausch in der Ammoniakkondensationseinheit im Vergleich zu einem Normalbetrieb zur Verfügung stehen; der Normalbetrieb als 85-115 % des Auslegungswerts des Ammoniaksynthesekonverters definiert ist, und wobei der Auslegungswert des Ammoniaksynthesekonverters die Raumgeschwindigkeit (SV) über dem ersten Katalysatorbett eines Katalysatormoduls ist und im Bereich zwischen 20.000 und 50.000 Nm³/h/m³ liegt.

3. Verfahren nach einem der Ansprüche 1-2, weiter umfassend:
iii-2) Anpassen des Kühlmediumflusses zur Ammoniakkondensationseinheit entsprechend dem Druck des komprimierten Ammoniakdampfstroms; und/oder
iii-3) Anpassen der Temperatur des zur Ammoniakkondensationseinheit geleiteten Kühlmediums durch Recyceln eines Abschnitts des Kühlmediumrücklaufstroms.

4. Verfahren nach einem der Ansprüche 1-3, wobei vor der Durchführung von Schritt ii) der Ammoniakdampfstrom zu einem Abscheider geführt wird, um den Ammoniakdampfstrom zu erzeugen.

5. Verfahren nach einem der Ansprüche 1-4, wobei ein flüssiger Ammoniak-Spülstrom aus dem Ammoniakverdampfer abgezogen wird, der zu einer Ammoniak-Separationseinheit, beispielsweise einem Entspannungsgefäß, geführt wird, um einen separaten Ammoniakdampfstrom zu erzeugen.

6. Verfahren nach Anspruch 5, wobei der separate Ammoniakdampfstrom in Schritt ii) direkt dem Ammoniakkompressor zugeführt oder mit dem Ammoniakdampfstrom aus dem Abscheider kombiniert wird, d. h. vor der Durchführung von Schritt ii).

7. Verfahren nach einem der Ansprüche 1-6, wobei Schritt ii) weiter das Bereitstellen eines Anti-Surge-Systems wie beispielsweise eines Anti-Surge-Ventils, d. h. eines Rückschlagventils, und optional eines Durchflussregelventils im Ammoniakkompressor umfasst; und das weitere Recyceln eines weiteren Abschnitts des komprimierten Ammoniakdampfstroms, d. h. eines dedizierten Prozess-Recyclingstroms, wie beispielsweise bis zu 10 % seines Durchflussvolumens, z. B. bis zu 1 % seines Durchflussvolumens durch das Anti-Surge-Ventil und das optionale Durchflussregelventil des Ammoniakkompressors umfasst.

8. Verfahren zum Betreiben eines Ammoniak-Kühlkreislaufs, wobei der Ammoniak-Kühlkreislauf der Ammoniak-Kühlkreislauf einer Ammoniaksyntheseanlage ist, wobei die Ammoniaksyntheseanlage einen Ammoniaksynthesekonverter zum Erzeugen eines Ammoniak-Produktgasstroms umfasst, wobei das Verfahren Folgendes umfasst:
i) Verdampfen eines flüssigen Ammoniakstroms in einem Ammoniakverdampfer unter Verwendung eines Wärmeaustauschmediums zum Erzeugen eines Ammoniakdampfstroms, wobei das Wärmeaustauschmedium der Ammoniak-Produktgasstrom aus dem Ammoniaksynthesekonverter der Ammoniaksyntheseanlage ist;
ii) Komprimieren des Ammoniakdampfstroms in einem Ammoniakkompressor zum Erzeugen eines komprimierten Ammoniakdampfstroms;
iii) Kühlen des komprimierten Ammoniakdampfstroms in einer Ammoniakkondensationseinheit unter Verwendung eines Kühlmediums zum Erzeugen eines kondensierten Ammoniakstroms und eines Kühlmediumrücklaufstroms;
iv) Abziehen des kondensierten Ammoniakstroms und Sammeln desselben in einem Ammoniakspeicher;
v) Abziehen des flüssigen Ammoniakstroms aus dem Ammoniakspeicher;
wobei das Verfahren weiter Folgendes umfasst:
- Anpassen des Kühlmediumstroms zur Ammoniakkondensationseinheit entsprechend dem Druck des komprimierten Ammoniakdampfstroms; und/oder
- Anpassen der Temperatur des zur Ammoniakkondensationseinheit geleiteten Kühlmediums durch Recyceln eines Abschnitts des Kühlmediumrücklaufstroms.

9. Ammoniak-Kühlkreislauf, der zur Durchführung des Verfahrens nach einem der Ansprüche 1-8 angeordnet ist; wobei der Ammoniak-Kühlkreislauf Folgendes umfasst:
- einen Ammoniakverdampfer, der dazu angeordnet ist, einen flüssigen Ammoniakstrom aufzunehmen und einen Ammoniakdampfstrom bereitzustellen, wobei der Ammoniakverdampfer dazu angeordnet ist, einen Ammoniak-Produktgasstrom aus dem Ammoniaksynthesekonverter einer Ammoniaksyntheseanlage als Wärmeaustauschmedium aufzunehmen;
- einen Ammoniakkompressor, der dazu angeordnet ist, den Ammoniakdampfstrom aufzunehmen und einen komprimierten Ammoniakdampfstrom bereitzustellen;
- eine Ammoniakkondensationseinheit, die dazu angeordnet ist, den komprimierten Ammoniakdampfstrom aufzunehmen und einen kondensierten Ammoniakstrom bereitzustellen, wobei die Ammoniakkondensationseinheit ein Rohrbündelwärmetauscher ist, der dazu angeordnet ist, ein Kühlmedium aufzunehmen, nämlich Wasser, d. h. Kühlwasser, wobei kondensierendes Ammoniak auf der Mantelseite durchläuft und das Kühlwasser auf der Rohrseite durchläuft;
- einen Ammoniakspeicher, der dazu angeordnet ist, den kondensierten Ammoniakstrom aufzunehmen und den flüssigen Ammoniakstrom bereitzustellen.

10. Verwendung des Ammoniak-Kühlkreislaufs nach Anspruch 9 für die Umrüstung einer Ammoniaksyntheseanlage zu einer grünen Ammoniaksyntheseanlage, wobei die grüne Ammoniaksyntheseanlage als eine Ammoniaksyntheseanlage definiert ist, in der der für die Ammoniaksynthese erforderliche Wasserstoff durch Wasser- oder Dampfelektrolyse bereitgestellt wird, die mit Strom aus erneuerbaren Quellen wie Wind-, Solar- oder Wasserkraft angetrieben wird.

11. Ammoniaksyntheseanlage, umfassend:
- den Ammoniak-Kühlkreislauf nach Anspruch 9;
- einen Ammoniaksynthesekonverter, der dazu angeordnet ist, Ammoniaksynthesegas, das Wasserstoff und Stickstoff umfasst, aufzunehmen und den Ammoniak-Produktgasstrom bereitzustellen;
- eine Elektrolyseeinheit, die dazu angeordnet ist, Wasser oder Dampf aufzunehmen und den Wasserstoff bereitzustellen.

## Revendications

1. Procédé de fonctionnement d'un circuit de refroidissement d'ammoniac, ledit circuit de refroidissement d'ammoniac étant le circuit de refroidissement d'ammoniac d'une usine de synthèse d'ammoniac, ladite usine de synthèse d'ammoniac comprenant un convertisseur de synthèse d'ammoniac pour produire un flux de gaz de produit d'ammoniac, ledit procédé comprenant :
i) l'évaporation d'un flux liquide d'ammoniac dans un évaporateur d'ammoniac en utilisant un milieu d'échange de chaleur pour générer un flux de vapeur d'ammoniac, dans lequel le milieu d'échange de chaleur est le flux de gaz de produit d'ammoniac provenant du convertisseur de synthèse d'ammoniac de l'usine de synthèse d'ammoniac ;
ii) la compression du flux de vapeur d'ammoniac dans un compresseur d'ammoniac pour générer un flux de vapeur d'ammoniac comprimé ;
iii) le refroidissement du flux de vapeur d'ammoniac comprimé dans une unité de condensation d'ammoniac en utilisant un milieu de refroidissement pour générer un flux d'ammoniac condensé et un flux de retour de milieu de refroidissement ;
iv) le retrait du flux d'ammoniac condensé et la collecte de celui-ci dans un accumulateur d'ammoniac ;
v) le retrait à partir de l'accumulateur d'ammoniac dudit flux de liquide d'ammoniac ;
dans lequel le procédé comprend en outre :
iii-1) l'adaptation du niveau de liquide de l'ammoniac condensé à l'intérieur de l'unité de condensation d'ammoniac en fonction de la pression du flux de vapeur d'ammoniac comprimé, dans lequel l'unité de condensation d'ammoniac est un échangeur de chaleur à tube-coque présentant de l'ammoniac condensé passant du côté de la coque, et le milieu de refroidissement étant de l'eau, c'est-à-dire de l'eau de refroidissement, passant du côté du tube.

2. Procédé selon la revendication 1, dans lequel, dans iii-1), le niveau de liquide d'ammoniac condensé dans l'unité de condensation d'ammoniac est tel que 70 % ou moins de la surface d'échange thermique dans l'unité de condensation d'ammoniac est disponible, par rapport à un fonctionnement normal ; le fonctionnement normal étant défini comme 85 à 115 % de la valeur de conception du convertisseur de synthèse d'ammoniac, et dans lequel la valeur de conception du convertisseur de synthèse d'ammoniac est la vitesse spatiale (VS) sur le premier lit de catalyseur d'un module de catalyseur et comprise entre 20 000 et 50 000 Nm³/h/m³.

3. Procédé selon l'une quelconque des revendications 1-2, comprenant en outre :
iii-2) l'adaptation du débit du milieu de refroidissement vers l'unité de condensation d'ammoniac en fonction de la pression du flux de vapeur d'ammoniac comprimé ; et/ou
iii-3) l'adaptation de la température du milieu de refroidissement dirigé vers l'unité de condensation d'ammoniac en recyclant une partie du flux de retour du milieu de refroidissement.

4. Procédé selon l'une quelconque des revendications 1 à 3, dans lequel avant de réaliser l'étape ii), le flux de vapeur d'ammoniac est conduit vers un tambour d'élimination pour générer ledit flux de vapeur d'ammoniac.

5. Procédé selon l'une quelconque des revendications 1 à 4, dans lequel un flux de purge de liquide d'ammoniac est retiré de l'évaporateur d'ammoniac qui est conduit vers une unité de séparation d'ammoniac, telle qu'un ballon de détente, pour générer un flux de vapeur d'ammoniac séparé.

6. Procédé selon la revendication 5, dans lequel le flux de vapeur d'ammoniac séparé est introduit directement dans le compresseur d'ammoniac à l'étape ii) ou combiné avec ledit flux de vapeur d'ammoniac provenant du tambour d'éjection, c'est-à-dire avant la réalisation de l'étape ii).

7. Procédé selon l'une quelconque des revendications 1 à 6, dans lequel l'étape ii) comprend en outre la fourniture d'un système anti-pompage tel qu'une soupape anti-pompage, c'est-à-dire une soupape anti-retour et éventuellement une soupape de régulation de débit dans le compresseur d'ammoniac ; et le recyclage supplémentaire d'une autre partie du flux de vapeur d'ammoniac comprimé, c'est-à-dire un flux de recyclage de processus dédié, tel que jusqu'à 10 % de son volume de débit, par exemple jusqu'à 1 % de son volume de débit, à travers la soupape anti-pompage et la soupape de régulation de débit optionnelle du compresseur d'ammoniac.

8. Procédé de fonctionnement d'un circuit de refroidissement d'ammoniac, ledit circuit de refroidissement d'ammoniac étant le circuit de refroidissement d'ammoniac d'une usine de synthèse d'ammoniac, ladite usine de synthèse d'ammoniac comprenant un convertisseur de synthèse d'ammoniac pour produire un flux de gaz de produit d'ammoniac, ledit procédé comprenant :
i) l'évaporation d'un flux liquide d'ammoniac dans un évaporateur d'ammoniac en utilisant un milieu d'échange de chaleur pour générer un flux de vapeur d'ammoniac, dans lequel le milieu d'échange de chaleur est le flux de gaz de produit d'ammoniac provenant du convertisseur de synthèse d'ammoniac de l'usine de synthèse d'ammoniac ;
ii) la compression du flux de vapeur d'ammoniac dans un compresseur d'ammoniac pour générer un flux de vapeur d'ammoniac comprimé ;
iii) le refroidissement du flux de vapeur d'ammoniac comprimé dans une unité de condensation d'ammoniac en utilisant un milieu de refroidissement pour générer un flux d'ammoniac condensé et un flux de retour de milieu de refroidissement ;
iv) le retrait du flux d'ammoniac condensé et la collecte de celui-ci dans un accumulateur d'ammoniac ;
v) le retrait à partir de l'accumulateur d'ammoniac dudit flux de liquide d'ammoniac ;
dans lequel le procédé comprend en outre :
- l'adaptation du débit du milieu de refroidissement vers l'unité de condensation d'ammoniac en fonction de la pression du flux de vapeur d'ammoniac comprimé ; et/ou
- l'adaptation de la température du milieu de refroidissement dirigé vers l'unité de condensation d'ammoniac en recyclant une partie du flux de retour du milieu de refroidissement.

9. Circuit de refroidissement d'ammoniac conçu pour mettre en œuvre le procédé selon l'une quelconque des revendications 1 à 8 ; dans lequel le circuit de refroidissement d'ammoniac comprend :
- un évaporateur d'ammoniac agencé pour recevoir un flux liquide d'ammoniac et fournir un flux de vapeur d'ammoniac, l'évaporateur d'ammoniac étant agencé pour recevoir un flux de gaz de produit d'ammoniac provenant du convertisseur de synthèse d'ammoniac d'une usine de synthèse d'ammoniac, comme milieu d'échange de chaleur ;
- un compresseur d'ammoniac agencé pour recevoir le flux de vapeur d'ammoniac et fournir un flux de vapeur d'ammoniac comprimé ;
- une unité de condensation d'ammoniac agencée pour recevoir le flux de vapeur d'ammoniac comprimé et fournir un flux d'ammoniac condensé, l'unité de condensation d'ammoniac étant un échangeur de chaleur à tube-coque agencé pour recevoir un milieu de refroidissement étant de l'eau, c'est-à-dire de l'eau de refroidissement dans laquelle l'ammoniac condensé passe du côté de la coque et l'eau de refroidissement passe du côté du tube ;
- un accumulateur d'ammoniac agencé pour recevoir le flux d'ammoniac condensé et fournir le flux de liquide d'ammoniac.

10. Utilisation du circuit de refroidissement d'ammoniac selon la revendication 9 pour la transformation d'une usine de synthèse d'ammoniac en une usine de synthèse d'ammoniac vert, l'usine de synthèse d'ammoniac vert étant définie comme une usine de synthèse d'ammoniac dans laquelle l'hydrogène nécessaire à la synthèse d'ammoniac est fourni par électrolyse de l'eau ou de la vapeur alimentée par de l'électricité produite à partir de sources renouvelables, telles que l'énergie éolienne, solaire ou hydraulique.

11. Usine de synthèse d'ammoniac comprenant :
- le circuit de refroidissement d'ammoniac selon la revendication 9 ;
- un convertisseur de synthèse d'ammoniac agencé pour recevoir du gaz de synthèse d'ammoniac comprenant de l'hydrogène et de l'azote, et fournir le flux de gaz de produit d'ammoniac ;
- une unité d'électrolyse agencée pour recevoir de l'eau ou de la vapeur et fournir ledit hydrogène.
